# EUROPEAN PATENT SPECIFICATION

(11) **EP 2 009 400 B1**
(45) Date of publication and mention of the grant of the patent: **03.01.2018**
(21) Application number: 08010833.5
(22) Date of filing: 13.06.2008
(51) Int. Cl.: G01C 21/30

(54) **Vehicle position recognition device, navigation device, vehicle position recognition method**
Vorrichtung zur Fahrzeugpositionserkennung, Navigationsvorrichtung, Verfahren zur Fahrzeugpositionserkennung
Dispositif de reconnaissance de la position d'un véhicule, dispositif de navigation, procédé de reconnaissance de la position d'un véhicule

(30) Priority: 29.06.2007 JP 2007171891
(43) Date of publication of application: 31.12.2008
(73) Proprietor: Aisin AW Co., Ltd., Fujii-cho Anjo-shi, Aichi 444-1192 (JP)
(72) Inventor: Nakao, Koichi, Okazaki-shi Aichi 444-8564 (JP); Nakamura, Masaki, Okazaki-shi Aichi 444-8564 (JP); Ishikawa, Tomoaki, Okazaki-shi Aichi 444-8564 (JP); Kanba, Motoki, Okazaki-shi Aichi 444-8564 (JP); Aisaka, Osamu, Okazaki-shi Aichi 444-8564 (JP)
(74) Representative: Kramer Barske Schmidtchen Patentanwälte PartG mbB

(56) References cited:
- EP-A1- 1 223 407
- JP-A- 2006 284 254
- JP-A- 2007 078 519
- US-A- 5 422 815
- US-A1- 2003 055 558

## Description

### 1. Field of the Invention

The present invention relates to a vehicle position recognition device, a navigation device that comprises the vehicle position recognition device, and a vehicle position recognition method or the like, for example, to recognize a vehicle position.

### 2. Description of the Related Art

A technique has been known which performs, in a navigation device or the like, such operations as the display of a vehicle position and the guidance along a route to the destination by using road map data representing the information of actual roads. Such road map data constituted by digital data includes road network data formed by the combination of nodes and links. Herein, the node generally refers to a coordinate point representing an intersection or a curve of a road or the like. The respective nodes are connected by the links. The connection relationship among the plurality of links forms a road network representing roads. Each of the links is provided with link information representing the attributes of the link. The attributes include, for example, the link number, the coordinate values of a start point node and an end point node of the link, the distance of the link, the road type or class, the road width, the traffic regulation, and so forth.

The navigation device obtains the position of a vehicle in accordance with a method such as satellite navigation using a GPS (Global Positioning System) or autonomous navigation using an in-vehicle sensor, and maps the vehicle on the road map data. At a narrow-angled branch point at which a road is divided into branch roads at a relatively small angle, however, the vehicle may be mapped on a road different from the road actually being passed by the vehicle due to an error in the satellite or autonomous navigation. In the navigation device, the vehicle position is superimposed and displayed on a road map. If the road map displays a vehicle position different from the actual vehicle position, a driver may become confused.

To improve the accuracy of recognizing the vehicle position at the narrow-angled branch point, Japanese Unexamined Patent Application Publication No. 2005-292082 (e.g., the paragraphs [0002] to [0012]) proposes a technique of shifting the accuracy of position measurement performed by a receiver for satellite navigation to a higher level. According to the publication, a high-accuracy position measurement unit, which has been planned to be introduced in the future, is used to suppress the erroneous mapping conventionally caused by the error in the position measurement. Further, Japanese Unexamined Patent Application Publication No. 2006-017644 (e.g., the paragraphs [0016] to [0024]) describes a navigation device which determines which one of branch roads is being passed by the vehicle on the basis of the threshold speed for the vehicle speed based on the speed limit of the branch road and the state of a direction indicator used in a lane change.

Meanwhile, the navigation device performs, as other functions thereof, the guidance along the route to the destination, the provision of relevant information of the route, and so forth. The provision of relevant information includes, for example, the guidance to a rest area such as a roadside station and a service area and the guidance to the next interchange. If the destination has been input in the navigation device, the route of the vehicle is calculated on the basis of the destination. Thus, the above-described guidance can be easily performed. Meanwhile, if the destination has not been input in the navigation device, a virtual destination area is calculated in accordance with the movement of the vehicle, and information according to a route to the virtual destination area is provided. In the setting of such a virtual destination area, if the route includes a branch point, it is difficult to predict the virtual destination area ahead of the branch point. Japanese Unexamined Patent Application Publication No. 2006-284254 (e.g., the paragraphs [0002] to [0007] and the paragraphs [0043] to [0059]) proposes a course prediction method of predicting and presenting a course leaving from the branch point on the basis of the passage history of the driver at a branch point. On the basis of the predicted leaving course, the virtual destination area is predicted, and the information according to the route to the destination area is provided. JP 2007 078519 A relates to a vehicle-mounted navigation system and map-matching method capable of storing road passage history and of taking the same into consideration when map-matching processing is performed.

US 2003 055558 A1 relates to a navigation system, method and program for automotive vehicles capable of using a user's knowledge of a predetermined region while searching for an object.

US 5 422 815 A relates to a navigation apparatus and a navigation method with an improved capability of displaying a correct travelling locus.

### SUMMARY OF THE INVENTION

If the accuracy of the position measurement is improved at the narrow-angled branch point, as in the technique described in the first publication, the erroneous mapping can be substantially suppressed. However, the high-accuracy position measurement unit is expensive, and thus increases the costs of the entire navigation device. If the technique described in the second publication is used, the accuracy of identifying the road, i.e., the link at the narrow-angled branch point can be improved. However, the vehicle speed and the state of the direction indicator, for example, are expected to have a variety of combinations, depending on the location of the branch point, the operation by the driver, and so forth. Further, the technique uses vehicle information different from the information for the satellite or autonomous navigation. Therefore, the operation of the navigation device may become complicated.

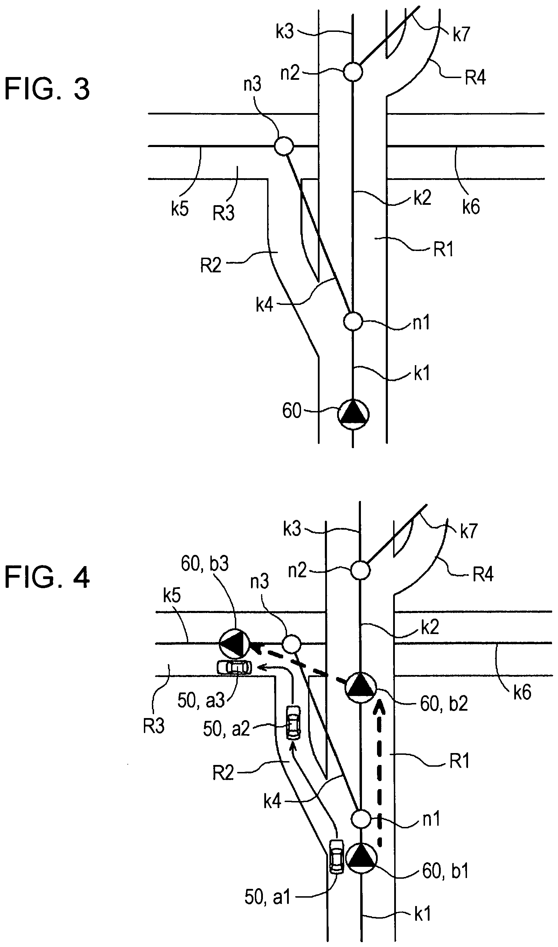

The course prediction method described in the third publication is a technique for information provision to predict the virtual destination area by predicting the course leaving from the branch point before the vehicle reaches the branch point. Further, as illustrated in Fig. 3 of the third publication, the course prediction method is assumed to predict, as the course ahead of the branch point, the leaving course from the branch point at which the map matching can be satisfactorily performed on the basis of the satellite or autonomous navigation. That is, without tracing a passage route ahead of the branch point, the course prediction method predicts the leaving course, as the road, i.e., the link to be actually passed by the vehicle immediately after the branch point, at the branch point identifiable on the basis of the satellite or autonomous navigation. Thus, map matching using the result of the prediction of the leaving course is not performed. Further, the necessity of such map matching is not mentioned at all. That is, the above-described issue of the fundamental map matching function of the navigation device, particularly the issue of the map matching at the narrow-angled branch point, still remains unresolved.

The present invention has been made in view of the above issues, and it is an object of the present invention to provide a vehicle position recognition device and method capable of accurately determining links passed by a vehicle among a plurality of links branching at a branch point, particularly a narrow-angled branch point.

This is achieved by the vehicle position recognition device according to claim 1 and the vehicle position recognition method according to claim 10.

Features of further advantageous embodiments are set forth in the dependent claims.

According to this characteristic configuration, the information of the route passed by the vehicle in the past at the branch point of the links can be appropriately collected and stored as the passage history information. Further, on the basis of the thus stored passage history information, the learned priority information is generated which represents the priorities of the respective links used in the determination of the links passed by the vehicle. Therefore, in the determination by the link determination unit of the links passed by the vehicle among the plurality of links branching at the branch point, it is possible to perform the determination reflecting the result of learning of the route passed by the vehicle in the past with the use of the learned priority information. Accordingly, even if it is difficult to determine the links of a road being passed by the vehicle solely from the vehicle position information and the road information obtained by the GPS positioning or the autonomous navigation, as at a narrow-angled branch point or the like, for example, the links passed by the vehicle can be accurately determined among the plurality of links branching at the branch point.

Further, the vehicle position recognition device according to the above aspect of the present invention may be characterized in that the history information generation unit stores the route of the links determined by the link determination unit over a predetermined storage section extending from the branch point, and generates the passage history information on the basis of the stored route of the links.

According to this characteristic, the history information generation unit stores the route of the links determined by the link determination unit over the predetermined storage section to generate the passage history information. If the route of the links is stored over an unnecessarily long range, the amount of data of the passage history information is increased, and thus the history information storage unit requires a large capacity. If the range of the links to be stored is specified, as in the present characteristic, the links determined by the link determination unit can be effectively stored without waste.

Further, the vehicle position recognition device according to the above aspect of the present invention may be characterized in that the learned priority information is information determined on the basis of the passage history information and representing the priorities determined on the basis of passage ratios of passages by the vehicle of the plurality of links branching at the branch point.

According to this characteristic, the learned priority information is generated which is the information determined on the basis of the passage history information and representing the priorities on the basis of the passage ratios at the branch point. In a frequently used road, the passage ratios of the passages by the vehicle of the respective roads branching at the branch point are biased. With the use of the bias, the links passed by the vehicle can be accurately determined among the plurality of links branching at the branch point.

Further, the vehicle position recognition device according to the above aspect of the present invention may be characterized in that the link determination unit determines the links passed by the vehicle with the use of the learned priority information.

According to this characteristic, with the use of the learned priority information, the link determination unit can perform the determination reflecting the result of learning of the route passed by the vehicle in the past. Accordingly, even if it is difficult to determine the links of a road being passed by the vehicle solely from the vehicle position information and the road information obtained by the GPS positioning or the autonomous navigation, as at a narrow-angled branch point or the like, for example, it is possible to improve the accuracy of determining the links passed by the vehicle among the plurality of links branching at the branch point.

Further, the vehicle position recognition device according to the above aspect of the present invention may be characterized by further including a general-purpose priority information acquisition unit for acquiring general-purpose priority information set on the basis of the attributes of roads and representing the priorities of the respective links used in the determination of the links passed by the vehicle among the plurality of branching links. Further, the vehicle position recognition device may be characterized in that the link determination unit determines the links passed by the vehicle with the use of the learned priority information in addition to or in place of the general-purpose priority information.

At a branch point of a road other than the frequently used road, the link determination is performed with the use of the general-purpose priority information to determine the links under general conditions based on the attributes of the road. Meanwhile, at a branch point of the frequently used road, the link determination is performed with the use of the learned priority information generated on the basis of the passage history of the vehicle. If the learned priority information is used in place of the general-purpose priority information, the link determination according to the vehicle can be performed on the basis of the passage history of the vehicle, with the influence of the general conditions excluded. Meanwhile, if the learned priority information is used in addition to the general-purpose priority information, the link determination can be performed in a multifaceted manner in consideration of the both types of priority information.

Further, the vehicle position recognition device according to the above aspect of the present invention may be characterized in that the vehicle position information acquisition unit corrects the vehicle position information on the basis of the result of the determination by the link determination unit of the links passed by the vehicle.

There are a variety of ways to acquire the vehicle position information. According to the autonomous navigation, the current position of the vehicle is specified on the basis of the moving distance and the moving direction of the vehicle, with the immediately preceding position of the vehicle used as a reference. In this case, if there is a deviation in the vehicle position information, the deviation is gradually increased. Meanwhile, according to the present characteristic, the vehicle position information is corrected on the basis of the result of the determination of the links determined by the link determination unit. Thus, the accuracy of the vehicle position information can be improved. The link determination unit determines the links passed by the vehicle with the use of the vehicle position information. Therefore, the accuracy of the link determination is also improved.

Further, the vehicle position recognition device according to the above aspect of the present invention may be characterized in that the branch point of the links is a narrow-angled branch point.

The vehicle position information is acquired on the basis of a method such as the so-called satellite or autonomous navigation. At the narrow-angled branch point at which a road is divided into branch roads at a relatively small angle, the vehicle position information may take a value applicable to a plurality of links due to an error caused by the satellite or autonomous navigation. According to the present characteristic, however, the link determination unit determines the links passed by the vehicle with the use of the learned priority information generated in accordance with the passage history. Therefore, even if it is difficult to determine the links of a road being passed by the vehicle solely from the vehicle position information and the road information obtained by the GPS positioning or the autonomous navigation, particularly as at the narrow-angled branch point or the like, it is possible to improve the accuracy of determining the links passed by the vehicle among the plurality of branching links. The narrow-angled branch point refers to a branch point having a small angle which makes it difficult for a direction sensor to detect a change in the course, e.g., a branch point having an angle of 45 degrees or less.

Further, the vehicle position recognition device according to the above aspect of the present invention is characterized in that the history information generation unit determines, on the basis of the links determined by the link determination unit, the route actually passed by the vehicle at the branch point of the links, and generates the passage history information representing the actually passed route.

The history information generation unit generates, on the basis of the links determined by the link determination unit, the passage history information representing the route passed by the vehicle at the branch point of the links. In this case, if the passage history information includes a movement between links which are mutually discontinuous in the road information, it can be understood that a so-called "jump in position" has occurred. In this case, it is assumed that the links determined immediately after the passage through the branch point have been erroneously determined. If the links are corrected, the route actually passed by the vehicle can be determined. The present characteristic configuration determines the route actually passed by the vehicle at the branch point of the links, and generates the passage history information representing the actually passed route. The history information storage unit stores the passage history information according to the actual passage route. Accordingly, the learning unit can generate the learned priority information with a low computational load.

Further, the vehicle position recognition device according to another example not part of the present invention, may be arranged such that the history information generation unit generates the passage history information representing the route in accordance with the order of the links determined by the link determination unit.

The history information generation unit generates, on the basis of the links determined by the link determination unit, the passage history information representing the route passed by the vehicle at the branch point of the links. In this case, if the passage history information includes a movement between links which are mutually discontinuous in the road information, it is assumed that the so-called "jump in position" has occurred. The present characteristic configuration generates the passage history information representing the route in accordance with the order of the links determined by the link determination unit, irrespective of the presence or absence of such a "jump in position." However, if the passage history information includes the movement between the mutually discontinuous links in the road information, it is possible to perform the determination of the route actually passed by the vehicle including the determination of the presence or absence of the "jump in position," on the basis of the passage history information. Accordingly, the learning unit can generate the learned priority information of the route actually passed by the vehicle.

Further, the vehicle position recognition device according to the above aspect of the present invention may be characterized in that the storage section is a section in which a jump in position occurs as a movement from one of the links represented by the passage history information to another one of the links not in a connection relationship with the one of the links in the road information.

If the storage section is set to be an unnecessarily long section, the amount of data of the passage history information is increased, and the history information storage unit requires a large capacity. If the jump in position occurs, the actual passage route at the branch point can be determined. Therefore, with the storage section set to be the section in which a jump in position occurs, it is possible to secure a necessary and sufficient section and to acquire an appropriate data amount of the passage history information.

Further, the vehicle position recognition device according to the above aspect of the present invention may be characterized in that the storage section is a section extending up to a next branch point in the moving direction of the vehicle.

If the storage section is set to be an unnecessarily long section, the amount of data of the passage history information is increased, and the history information storage unit requires a large capacity. The passage history information is generated, with the branch point set as a start point. Thus, if the passage history information is generated beyond the branch point, overlapping sections are stored. According to the present characteristic configuration, the storage section is set to be the section extending up to the next branch point. Accordingly, it is possible to secure a necessary and sufficient section and to acquire an appropriate data amount of the passage history information.

A characteristic configuration of a navigation device according to an aspect of the present invention includes a vehicle position recognition device, a road information storage unit, a plurality of application programs, and a guidance information output unit. The vehicle position recognition device includes the respective configurations described above. The road information storage unit stores the road information. The plurality of application programs operate with reference to the vehicle position information recognized by the vehicle position recognition device and the road information. The guidance information output unit operates in accordance with the application programs, and outputs guidance information.

According to this characteristic configuration, the application programs can operate on the basis of the links determined with the use of the learned priority information. Therefore, it is possible to provide accurate guidance information on the basis of the links passed by the vehicle, which have been accurately determined at a branch point, particularly a narrow-angled branch point. For example, it is possible to reduce the jumps in position at the branch point, particularly the narrow-angled branch point, to thereby provide a navigation device having high visibility.

A vehicle position recognition program according to an aspect of the present invention is characterized by causing a computer to execute a vehicle position information acquisition step, a road information acquisition step, a link determination step, a history information generation step, a history information storage step, and a learning step. The vehicle position information acquisition step acquires vehicle position information representing a current position of a vehicle. The road information acquisition step acquires road information representing roads in a connection relationship among a plurality of links. The link determination step determines, on the basis of the vehicle position information and the road information, links passed by the vehicle. The history information generation step generates, on the basis of the links determined by the link determination step, passage history information representing a route passed by the vehicle at a branch point of the links. The history information storage step stores in a history information storage unit the passage history information generated by the history information generation step. The learning step generates, on the basis of the passage history information stored by the history information storage unit, learned priority information representing the priorities of the respective links used in the determination by the link determination step of the links passed by the vehicle among a plurality of links branching at the branch point.

According to this characteristic, in accordance with the program executed by the computer, the information of the route passed by the vehicle in the past at the branch point of the links can be appropriately collected and stored as the passage history information. Further, on the basis of the thus stored passage history information, the learned priority information is generated which represents the priorities of the respective links used in the determination of the links passed by the vehicle. Therefore, in the determination by the link determination step of the links passed by the vehicle among the plurality of links branching at the branch point, the determination reflecting the result of learning of the route passed by the vehicle in the past can be performed with the use of the learned priority information. Accordingly, even if it is difficult to determine the links of a road being passed by the vehicle solely from the vehicle position information and the road information obtained by the GPS positioning or the autonomous navigation, as at a narrow-angled branch point or the like, for example, the links passed by the vehicle can be accurately determined among the plurality of links branching at the branch point.

### BRIEF DESCRIPTION OF THE DRAWINGS

Fig. 1 is a block diagram illustrating a schematic configuration of a navigation device according to an embodiment of the present invention;
Fig. 2 is an explanatory diagram illustrating an example of configuration of map information stored in a map database;
Fig. 3 is an explanatory diagram illustrating a road including a narrow-angled branch point and road information of the road;
Fig. 4 is an explanatory diagram illustrating a passage history on the road of Fig. 3;
Fig. 5 is a flowchart for explaining a procedure of vehicle position recognition according to the embodiment of the present invention; and
Fig. 6 is an explanatory diagram illustrating link determination at the narrow-angled branch point.

### DESCRIPTION OF THE PREFERRED EMBODIMENTS

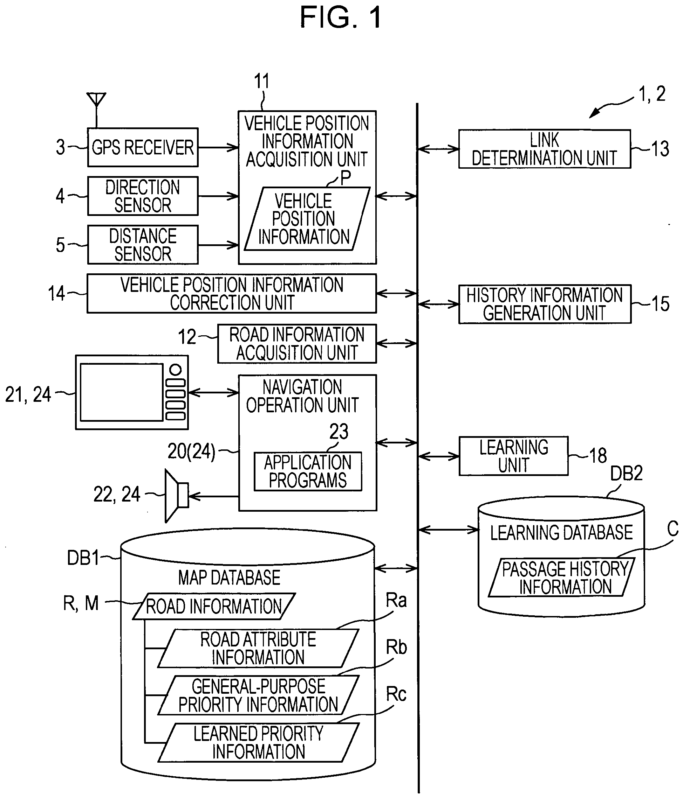

An embodiment of the present invention will be described below on the basis of the drawings. Fig. 1 is a block diagram illustrating a schematic configuration of a navigation device 1 according to the present embodiment. The navigation device 1 is configured to include a vehicle position recognition device 2, which is an embodiment of the present invention. The vehicle position recognition device 2 enables the determination of a road passed by a vehicle among a plurality of roads branching at a branch point, particularly a narrow-angled branch point, of a road, and the correction of vehicle position information P. On the basis of the corrected vehicle position information P, the navigation device 1 performs navigation processing including route guidance.

The navigation device 1 illustrated in Fig. 1 includes functional units such as a vehicle position information acquisition unit 11, a road information acquisition unit 12, a link determination unit 13, a vehicle position information correction unit 14, a history information generation unit 15, a learning unit 18, and a navigation operation unit 20. The respective functional units are configured to be implemented in either one or both of hardware and software (a program) to perform a variety of processes on input data, with an arithmetic processing unit such as a CPU (Central Processing Unit) or a DSP (Digital Signal Processor) functioning as a core member. Further, the respective functional units are configured to exchange information with one another. The navigation device 1 includes a map database DB1 storing map information and so forth and a learning database DB2. The map database DB1 and the learning database DB2 include, as a hardware configuration, a device including a recording medium capable of storing information and a drive unit for driving the recording medium, such as a hard disk drive, a DVD (Digital Versatile Disk) drive including a DVD-ROM (Read-Only Memory), and a CD (Compact Disk) drive including a CD-ROM, for example. As the recording medium, a medium rewritable or recordable as required is used. Detailed description will be made below of a configuration of each of the components constituting the navigation device 1 according to the present embodiment.

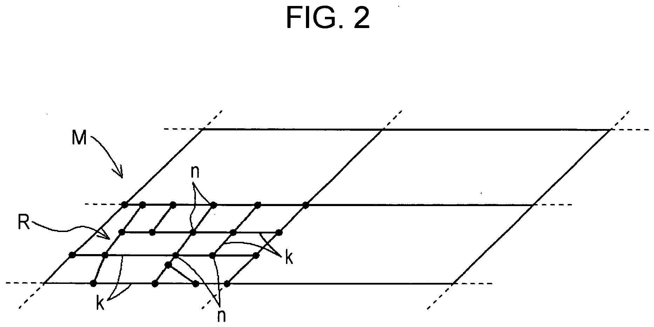

Map database: The map database DB1 is a database storing map information M divided into predetermined sections. Fig. 2 is an explanatory diagram illustrating an example of configuration of the map information M stored in the map database DB1. As illustrated in the drawing, the map information M includes road information R representing a road network in the connection relationship between a multitude of nodes n corresponding to intersections and links k corresponding to roads connecting between the respective intersections. Each of the nodes n includes the information of a position (coordinates) on a map represented by the latitude and the longitude. The respective links k are connected via the nodes n. Further, each of the links k includes, as attribute information thereof, such information as the road type, the link length, the road width, and the shape interpolation point for representing the link shape. Herein, the road type information refers to the information of the road types of roads classified into a plurality of types, such as car-only roads, town streets, narrow streets, and mountain roads, for example. The attribute information of the links k corresponds to road attribute information Ra (see Fig. 1). The map database DB1 corresponds to a road information storage unit of the present invention. Fig. 2 only illustrates the road information R of one section, with the road information R of the other sections omitted.

With reference to Fig. 1, the road information R includes general-purpose priority information Rb and learned priority information Rc, in addition to the road attribute information Ra. The general-purpose priority information Rb and the learned priority information Rc are the information representing the priorities of the respective links k used in the determination of the links k passed by the vehicle among the plurality of links k branching after the narrow-angled branch point. The general-purpose priority information Rb represents the priorities set on the basis of the road attribute information Ra and so forth. Detailed description of the general-purpose priority information Rb will be made later. The learned priority information Rc represents the priorities set on the basis of the result of learning based on a passage history of the vehicle. Detailed description of the learned priority information Rc will be made later.

Vehicle position information acquisition unit: The vehicle position information acquisition unit 11 functions as a vehicle position information acquisition unit for acquiring the vehicle position information P representing the current position of the vehicle. In the present example, the vehicle position information acquisition unit 11 is connected to a GPS receiver 3, a direction sensor 4, and a distance sensor 5. Herein, the GPS receiver 3 is a device for receiving GPS signals emitted from GPS satellites. The GPS signals are normally received every other second and output to the vehicle position information acquisition unit 11. The vehicle position information acquisition unit 11 analyzes the signals from the GPS satellites received by the GPS receiver 3 so as to acquire such information as the current position (the latitude and the longitude), the moving direction, and the moving speed of the vehicle, and the time. The direction sensor 4 is a sensor for detecting the moving direction of the vehicle or a change in the moving direction. The direction sensor 4 is constituted by, for example, a gyro sensor, a geomagnetic sensor, an optical rotation sensor installed to a rotary portion of a steering wheel, an angle sensor installed to a rotational resistance volume or a wheel, and so forth. The direction sensor 4 outputs the result of the detection to the vehicle position information acquisition unit 11. The distance sensor 5 is a sensor for detecting the vehicle speed and the moving distance of the vehicle. The distance sensor 5 is constituted by, for example, a vehicle speed pulse sensor for outputting a pulse signal every time a drive shaft or a wheel of the vehicle rotates by a predetermined amount, a yaw/G sensor for detecting the acceleration of the vehicle, a circuit for integrating the detected acceleration, and so forth. The distance sensor 5 outputs to the vehicle position information acquisition unit 11 the information of the vehicle speed and the moving distance as the result of the detection. On the basis of the outputs from the GPS receiver 3, the direction sensor 4, and the distance sensor 5, the vehicle position information acquisition unit 11 performs an operation for locating the position of the vehicle in accordance with a known method, to thereby acquire the vehicle position information P.

Road information acquisition unit: The road information acquisition unit 12 functions as a road information acquisition unit for acquiring the road information R representing roads in the connection relationship among the plurality of links k. The road information acquisition unit 12 acquires the road information R of the surroundings of the vehicle position extracted from the map database DB1. The acquired road information R includes the road attribute information Ra, the general-purpose priority information Rb, and the learned priority information Rc. The road information acquisition unit 12 also functions as a road attribute information acquisition unit, a general-purpose priority information acquisition unit, and a learned priority information acquisition unit.

Link determination unit: On the basis of the vehicle position information P and the road information R, the link determination unit 13 determines the links k passed by the vehicle. The link determination unit 13 determines the links k passed by the vehicle through a similar process to a known map matching process. The link determination unit 13 functions as a link determination unit. Further, as described later, the link determination unit 3 determines the links k passed by the vehicle at the branch point of the links k with the use of the learned priority information Rc and the general-purpose priority information Rb.

Vehicle position information correction unit: On the basis of the result of the determination by the link determination unit 13, the vehicle position information correction unit 14 performs a known map matching process to correct the vehicle position information P to be aligned on the road, i.e., the link k represented by the road information R. Thereby, the vehicle position information P acquired by the vehicle position information acquisition unit 11 is corrected to the vehicle position information P including the information of the current position of the vehicle represented by the latitude and the longitude and the information of the moving direction of the vehicle.

Navigation operation unit: The navigation operation unit 20 is an operation processing unit operating in accordance with application programs 23 to execute navigation functions such as the display of the vehicle position, the search for a route from the place of departure to the destination, the guidance along a course to the destination, and the search for the destination. For example, the navigation operation unit 20 performs a process of acquiring from the map database DB1 the map information M of the surroundings of the vehicle on the basis of the vehicle position information P, displaying an image of a map on a display input device 21, and superimposing and displaying a vehicle position mark on the image of the map on the basis of the vehicle position information P. Further, the navigation operation unit 20 searches for a route from a predetermined place of departure to the destination on the basis of the map information M stored in the map database DB1. Further, on the basis of the searched route from the place of departure to the destination and the vehicle position information P, the navigation operation unit 20 performs the guidance along the course for a driver by using either one or both of the display input device 21 and an audio output device 22. In the present embodiment, the navigation operation unit 20 is connected to the display input device 21 and the audio output device 22. The display input device 21 is constituted by a display device such as a liquid crystal display device and an input device such as a touch panel, with the two devices integrated with each other. The audio output device 22 is configured to include a speaker and so forth. In the present embodiment, the navigation operation unit 20, the display input device 21, and the audio output device 22 function as a guidance information output unit 24 of the present invention.

Fig. 3 is an explanatory diagram illustrating a road including a narrow-angled branch point and the road information of the road. In the drawing, n1 to n3, k1 to k7, and R1 to R4 indicate the nodes n, the links k, and roads corresponding to the links k1 to k7, respectively. The road R1 constituting a major road includes a narrow-angled branch point at the node n1. The road R2 constituting a branch road branching from the road R1 extends along the road R1 as a side road. At the node n3, road R2 is connected to the road R3 constituting a major road perpendicular to the road R1. A reference numeral 60 indicates a vehicle position mark displayed on the display input device 21. The vehicle position mark 60 indicates that the vehicle is moving toward the node n1, which represents the narrow-angled branch point. The narrow-angled branch point refers to a branch point having a small angle which makes it difficult for a direction sensor to detect a change in the course, e.g., an angle of 45 degrees or less.

History information generation unit: The history information generation unit 15 functions as a history information generation unit for generating, on the basis of the links k determined by the link determination unit 13, passage history information C representing the route passed by the vehicle at the branch point of the links k. Fig. 4 is an explanatory diagram illustrating the passage history on the road of Fig. 3. In Fig. 4, a vehicle 50 passing along the road R1 moves to the road R3 via the road R2, which is the branch road. The vehicle 50 at a position a1 on the road R1 is mapped on the link k1 corresponding to the road R1 by the correct link determination. Further, the vehicle position mark 60 is displayed at a position b1 on the link k1. The vehicle 50 at a position a2 on the road R2 extending along the road R1 is mapped not on the link k4 corresponding to the road R2 but on the link k2 corresponding to the road R1. Further, the vehicle position mark 60 is displayed at a position b2 on the link k2. The vehicle 50 at a position a3 on the road R3 is mapped on the link k5 corresponding to the road R3 by the correct link determination. Further, the vehicle position mark 60 is displayed at a position b3 on the link k5.

In the above, the positions a1 to a3 of the vehicle 50 and the positions b1 to b3 of the vehicle position mark 60 displayed on the display input device 21 are representative points. The link determination and the display of the vehicle position mark 60 are actually performed at shorter intervals. In the above-described example, the route constituted by the links k determined by the link determination unit 13 is expressed as a link sequence "k1→k2→k5" in accordance with the order of determination. With reference to Figs. 3 and 4, it is understood that the links k2 and k5 are not in the connection relationship with each other in the road information R. That is, a so-called "jump in position" occurs from the link k2 to the link k5. The jump in position indicates that the vehicle position mark 60 displayed on the display input device 21 becomes discontinuous to cause discomfort to the driver.

To enable the correct link determination, therefore, the vehicle position recognition device 2 according to the present embodiment generates the passage history information C from the passage history of the vehicle, and generates the learned priority information Rc on the basis of the passage history information C. On the basis of the route of the links k determined by the link determination unit 13, the history information generation unit 15 generates the passage history information C.

As an example, the passage history information C can be the information irrelevant to the actual passage route of the vehicle 50 and representing the route of the links k in the order of the links k determined by the link determination unit 13. For instance, in the example of Fig. 4, the route, i.e., the link sequence "k1→k2→k5" is generated as the passage history information C (C1). In the example illustrated in Figs. 3 and 4, a route-representing link sequence "k1→k4→k5," "k1→k2→k3," or "k1→k4→k3" may alternatively constitute the passage history information C (C2, C3, or C4, respectively).

The passage history information C2 is generated when a route from the road R1 to the road R3 via the road R2 is represented by the link sequence resulting from the correct link determination. The passage history information C3 is generated when a route straight along the road R1 without a change in the course at the branch point is represented by the correct link determination. The passage history information C4 is generated when the jump in position occurs in a different direction from the direction of the jump in position occurring in the link sequence represented by the passage history information C1.

The history information generation unit 15 stores the route of the links k determined by the link determination unit 13 over a predetermined storage section extending from the branch point, and generates the passage history information C on the basis of the stored route of the links k. Herein, the predetermined storage section refers to, for example, a section in which a "jump in position" occurs as a movement from one of the links k represented by the passage history information C to another one of the links k not in the connection relationship with the one of the links k in the road information R. In the above-described example, the jump in position occurs in the passage history information C1 and C4. In the passage history information C1, the storage section corresponds to a passage route including the link k1 before the branch point as the start point and extending up to the link k5 in which the jump in position occurs. In the passage history information C4, the storage section corresponds to a passage route including the link k1 before the branch point as the start point and extending up to the link k3 in which the jump in position occurs.

Alternatively, the predetermined storage section can be a section extending up to the next narrow-angled branch point in the moving direction of the vehicle or a section having a predetermined number of links. This is because, upon arrival to the next narrow-angled branch point, the passage history information C needs to be generated for the next narrow-angled branch point. Further, to determine the link k which completes the storage section when the jump in position does not occur in the section, the storage section may be set for each branch point such that the section has a predetermined number of links counted from the branch point. It is preferred to set the predetermined number to be equal to or greater than the number of links up to the link k in which the "jump in position" may occur. For instance, in the above-described example, if the predetermined number is set to be three, with the link k1 before the branch point as the starting point, a passage route extending up to the link k5 or k3 corresponds to the storage section. Needless to say, the predetermined number may be set to be four or more to improve the accuracy.

In the above-described example, the passage history information C is generated in accordance with the order of the links k determined by the link determination unit 13, independent of the actual passage route of the vehicle 50. According to the invention however, the history information generation unit 15 determines, on the basis of the links k determined by the link determination unit 13, the route actually passed by the vehicle 50 at the branch point of the links k, and generates the passage history information C representing the actually passed route.

For example, if the order of the links k determined by the link determination unit 13 is "k1→k2→k5", it is assumed that there is a movement from the link k2 to the link k5, although the links are not in the connection relationship with each other in the road information R. Since the movement is considered to be the jump in position, the history information generation unit 15 determines that the actual passage route is "k1→k4→k5", and generates the thus determined route as the passage history information C.

Learning database: The learning database DB2 functions as a history information storage unit for storing the passage history information C generated by the history information generation unit 15. The learning database DB2 calculates, for each branch point, the passage ratios of the passage routes extending from the branch point, creates a database from the results of the calculation, and stores the database. For example, the passage history information C1 (k1→k2→k5), C2 (k1→k4→k5), C3 (k1→k2→k3), and C4 (k1→k4→k3) of the above-described example have passage ratios 70%, 20%, 8%, and 2%, respectively.

If the passage history information C based on the passage routes actually passed by the vehicle 50 (C12 and C13) is generated, the passage history information C2 (k1→k4→k5) and C3 (k1→k2→k3) have passage ratios 90% and 10%, respectively.

Learning unit: On the basis of the passage history information C stored in the learning database DB2, the learning unit 18 generates the learned priority information Rc representing the priorities of the respective links k used in the determination of the links k passed by the vehicle 50 among the plurality of links k branching at the branch point. The learning unit 18 corresponds to a learning unit of the present invention. On the basis of the passage history information C1 to C4 stored in the learning database DB2, the passage ratios of the passages by the vehicle 50 of the plurality of links k2 and k4 branching at the branch point, i.e., the passage ratios of the routes k1→k2 and k1→k4 are 10% and 90%, respectively.

Thus, on the basis of the above passage ratios, the learning unit 18 generates the learned priority information Rc, which is the information representing the priorities for the links k2 and k4. In the above-described example, the learned priority information Rc is generated as coefficients 1.0 and 9.0 for the routes k1→k2 and k1→k4, respectively.

The learned priority information Rc generated by the learning unit 18 in the above-described manner is used in the determination by the link determination unit 13 of the links k passed by the vehicle. Further, the result of the determination by the link determination unit 13 of the links k passed by the vehicle is used in the correction by the vehicle position information correction unit 14 of the vehicle position information P.

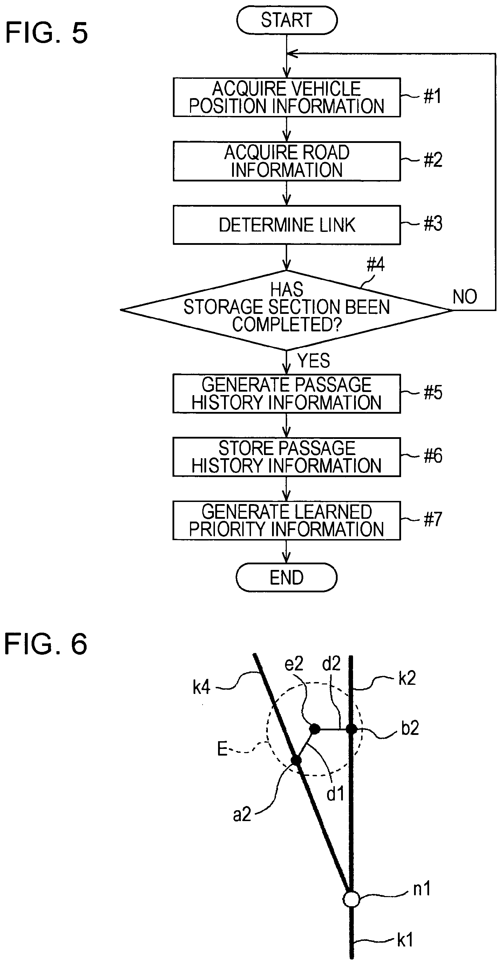

Procedure of vehicle position recognition: With reference to a flowchart illustrated in Fig. 5, description will be made below of a procedure of the vehicle position recognition by the vehicle position recognition device 2 according to the present embodiment. Herein, the description will continue below on the assumption that the vehicle position recognition device 2 has already recognized that the vehicle 50 has been passing the link k1 of Figs. 3 and 4. The procedure of the vehicle position recognition described below is performed by the respective functional units of the navigation device 1 implemented in either one or both of hardware and software (a program), with an arithmetic processing unit such as a CPU or a DSP functioning as a core member. If the respective functional units are constituted by a program (a vehicle position recognition program), the CPU or the DPS operates as a computer for performing respective steps constituting the respective functional units.

As described above, the vehicle position information acquisition unit 11 acquires the vehicle position information P (a vehicle position information acquisition step: Step #1). Further, the road information acquisition unit 12 acquires the road information R (a road information acquisition step: Step #2). On the basis of the acquired vehicle position information P and road information R, the link determination unit 13 determines the links k passed by the vehicle 50 (Step #3). A method of determining the links k performed by the link determination unit 13 will be described below with the use of a specific example. Fig. 6 is an explanatory diagram illustrating the link determination at the narrow-angled branch point illustrated in Fig. 3 and 4.

In the example illustrated in Fig. 6, the vehicle position information P prior to the correction by the vehicle position information correction unit 14 has been acquired as the information representing a position e2. Further, the vehicle position information P has an error range E. In a state in which the position represented by the vehicle position information P is located at the position e2, the error range E includes therein both the link k2 representing the major road and the link k4 branching from the node n1 representing the narrow-angled branch point. In this state, therefore, the link determination unit 13 determines the links k passed by the vehicle 50 on the basis of the general-purpose priority information Rb and coefficients D representing distances d1 and d2 from the position e2 represented by the vehicle position information P to the links k4 and k2, respectively. Herein, the coefficient D representing the distance d1 between the position e2 and the link k4 is calculated by the link determination unit 13 as 5.0, for example. Meanwhile, the coefficient D representing the distance d2 between the position e2 and the link k2 is calculated as 5.0, for example. The road information R acquired by the road information acquisition unit 12 includes the general-purpose priority information Rb representing the priorities of the links k at such a branch point. The general-purpose priority information Rb is the information set on the basis of the attributes of roads and representing the priorities of the respective links k used in the determination of the links k passed by the vehicle 50 among the plurality of branching links k. It is preferred that the general-purpose priority information Rb is, for example, the information representing the priorities of the respective links k determined in accordance with the possibilities of passage by the vehicle 50 of the plurality of links k branching at the branch point on the basis of general conditions, such as the road type and the road width, included in the attribute information of the respective links k. As illustrated in Figs. 3 and 4, if the road R1 represented by the link k2 is a major road and the road R2 represented by the link k4 is a side road, the general-purpose priority information Rb has coefficients 8.0 and 2.0, for example, for the links k2 and k4, respectively. Using the coefficients D of the distances d1 and d2 to the links k4 and k2 and the general-purpose priority information Rb, the link determination unit 13 calculates the degrees of correspondence of the links k2 and k4 as D×Rb=5.0×8.0=40.0 and D×Rb=5.0×2.0=10.0, respectively.

As described above, the degree of correspondence is higher in the link k2 extending along the link k4 than in the link k4 actually passed by the vehicle 50. Therefore, the link determination unit 13 determines that the link k passed by the vehicle 50 is the link k2.

Then, the history information generation unit 15 determines whether or not the predetermined storage section for generating the passage history information C has been completed (Step #4). As described above, the predetermined storage section is, for example, the section in which a "jump in position" occurs as a movement from one of the links k represented by the passage history information C to another one of the links k not in the connection relationship with the one of the links k in the road information R, or the section extending up to the next narrow-angled branch point in the moving direction of the vehicle. The link sequence represented by the passage history information C generable at the present moment is "k1→k2." The link sequence does not meet the above-described condition for completing the storage section. Therefore, the history information generation unit 15 determines "NO" at Step #4. Steps #1 to #4 described above are repeated until the predetermined storage section is completed.

When the vehicle 50 has reached the position a3 illustrated in Fig. 4, only the link k5 is included within the error range E are reduced. Thus, as a result of a link determination similar to the above-described link determination, the link k passed by the vehicle 50 is determined as the link k5. Herein, the links k2 and k5 are the links k not in the connection relationship with each other in the road information R, i.e., the "jump in position" occurs between the links k. Thus, the history information generation unit 15 determines that the storage section has been completed by the occurrence of the jump in position (Step #4), and generates the link sequence expressed as "k1→k2→k5" as the passage history information C (Step #5). The passage history information C may be generated as the link sequence representing the order of the links k determined as described above or the link sequence representing the actual route. In the present example, the passage history information C is generated, independently of the actual passage route, as the link sequence representing the order of the links k determined by the link determination unit 13. Step #5 or a step including Step #4 in Step #5 corresponds to a history information generation step of the present invention.

The generated passage history information C is stored in the learning database DB2 (a history information storage step: Step #6). The passage history information C is stored and accumulated as the above-described steps are repeated every time the vehicle 50 passes the same branch point. Due to a plurality of passages through the same branch point, the information representing the passage ratios of the vehicle 50 is created in the learning database DB2. For example, the passage history information C1 (k1→k2→k5), C2 (k1→k4→k5), C3 (k1→k2→k3), and C4 ((k1→k4→k3) have passage ratios 70%, 20%, 8%, and 2%, respectively.

On the basis of the passage history information C1 to C4, the learning unit 18 generates the learned priority information Rc representing the priorities of the respective links k used in the determination by the link determination unit 13 of the links k passed by the vehicle 50 among the plurality of links k branching at the branch point (a learning step: Step #7). On the basis of the passage history information C1 to C4 stored in the learning database DB2, the passage ratios of the passages by the vehicle 50 of the plurality of links k2 and k4 branching at the branch point, i.e., the passage ratios of the routes k1→k2 and k1→k4 are 10% and 90%, respectively.

On the basis of the above passage ratios, the learning unit 18 generates the learned priority information Rc, which is the information representing the priorities for the links k2 and k4. In the above-described example, the learned priority information Rc is generated as coefficients 1.0 and 9.0 for the routes k1→k2 and k1→k4, respectively.

After the learning process, i.e., after the generation of the learned priority information Rc, the link determination is performed as follows when the vehicle 50 passes the same branch point. Description will be made below of an example in which the learned priority information Rc is used in the example of the link determination illustrated in Fig. 6. The coefficients D of the distances d1 and d2 to the links k4 and d2 and the general-purpose priority information Rb are similar to those of the above-described example. That is, the coefficients D of the distances d1 and d2 are represented as d1=d2=5.0, and the general-purpose priority information Rb has coefficients 8.0 and 2.0 for the routes k1→k2 and k1→k4, respectively. Using the coefficients D of the distances d1 and d2 to the links k4 and k2, the general-purpose priority information Rb, and the learned priority information Rc, the link determination unit 13 calculates the degrees of correspondence of the links k2 and k4 as D×Rb×Rc=5.0×8.0×1.0=40.0 and D×Rb×Rc=5.0×2.0×9.0=90.0, respectively.

As described above, the degree of correspondence is higher in the link k4 actually passed by the vehicle 50 than in the link k2 extending along the link k4. Therefore, the link determination unit 13 determines that the link k passed by the vehicle 50 is the link k4.

In the above-described example, the learned priority information Rc is used in addition to the general-purpose priority information Rb. Alternatively, as another embodiment, the determination can also be performed with the use of the learned priority information Rc in place of the general-purpose priority information Rb. In such a case, the degrees of correspondence of the links k2 and k4 are calculated as D×Rc=5.0×1.0=5.0 and D×Rc=5.0×9.0=45.0, respectively.

As described above, if the learned priority information Rc based on the passage history information C is taken into consideration, accurate determination can be performed even at the narrow-angled branch point at which it is difficult to perform the determination solely on the basis of the positioning result. Further, the learned priority information Rc specifies the priorities. Thus, if the positioning result enables relatively definite determination, a determination result according to the positioning result can be obtained. For example, it is assumed that the vehicle 50 is passing on the link k2, and that the distance coefficients D of the links k2 and k4 obtained by the positioning are 7.0 and 3.0, respectively.

With the use of the coefficients D of the distances d1 and d2 to the links k4 and k2, the general-purpose priority information Rb, and the learned priority information Rc, the degrees of correspondence of the links k2 and k4 are calculated as D×Rb×Rc=7.0×8.0×1.0=56.0 and D×Rb×Rc=3.0×2.0×9.0=54.0, respectively.

As described above, the degree of correspondence is higher in the link k2 actually passed by the vehicle 50 than in the link k4 extending along the link k2. Even with the use of the learned priority information Rc based on the learning result, therefore, if the positioning result is definite, the link determination unit 13 determines that the link k passed by the vehicle 50 is the link k2.

In the above-described embodiment, the link determination performed always with the use of the learned priority information Rc has been illustrated as an example. Alternatively, if the positioning result enables a relatively definite link determination, the learned priority information Rc can be excluded from consideration. That is, it is possible to acquire a relatively accurate positioning result, and at the same time to prevent such an action that the erroneous matching is caused by the influence of the learned priority information Rc. Particularly, if the determination is performed with the use of the learned priority information Rc in place of the general-purpose priority information Rb, the influence of the learned priority information Rc is substantially increased in the calculation of the degrees of correspondence, as described above. In such a case, it is preferred to select between application and non-application of the learned priority information Rc on the basis of the positioning result, i.e., the relationship between the links k and the accuracy of the vehicle position information P at a location at which the link determination is performed.

As described above, the present embodiment can provide a vehicle position recognition device capable of accurately determining links passed by a vehicle among a plurality of links branching at a branch point, particularly a narrow-angled branch point.

Other embodiments: (1) In the above-described embodiment, the description has been made of the example in which the road information R stored in the map database DB1 includes the general-purpose priority information Rb and the learned priority information Rc. However, the embodiment of the present invention is not limited thereto. That is, the general-purpose priority information Rb may be the information generated by the general-purpose priority information acquisition unit on the basis of the road attribute information Ra every time the link determination unit 13 determines the links k passed by the vehicle 50. In the above-described embodiment, the road information acquisition unit 12 has the function of the general-purpose priority information acquisition unit. Meanwhile, the present embodiment includes another functional unit for generating the general-purpose priority information Rb on the basis of the road attribute information Ra and so forth. Alternatively, the link determination unit 13 may be configured to function as the general-purpose priority information acquisition unit. Further, the learned priority information Rc may be configured not as the information generated by the learning unit 18 and previously stored in the map database DB1, but as the information generated by the learning unit 18, on the basis of the passage history information C stored in the learning database DB 2, every time the link determination unit 13 determines the links k passed by the vehicle 50.
(2) In the above-described embodiment, the description has been made of the example in which the learned priority information Rc and the general-purpose priority information Rb are used as the priorities of the respective links k used in the determination of the links k passed by the vehicle 50. However, the embodiment of the present invention is not limited thereto. Thus, it is also preferred to configure the embodiment such that the priorities of the respective links k are determined in consideration of a condition other than the learned priority information Rc and the general-purpose priority information Rb. For example, as one of preferred embodiments of the present invention, there is a configuration in which, if the route to the destination has been set in the navigation operation unit 20, the links k passed by the vehicle 50 are determined with the use of set route priority information for increasing the priorities of the links k extending along the route.

The present invention can be used in a navigation device or the like, for example, and can be applied to a vehicle position recognition device for recognizing a vehicle position.

## Claims

1. A vehicle position recognition device comprising:
a vehicle position information acquisition unit (11) for acquiring vehicle position information representing a current position of a vehicle;
a road information acquisition unit (12) for acquiring road information (R) representing a road network in a connection relationship between a multitude of nodes (n) corresponding to intersections and links (K) corresponding to roads connecting between the respective intersections;
a link determination unit (13) for determining, on the basis of the vehicle position information and the road information, links (k) passed by the vehicle;
a history information generation unit (15) for generating, on the basis of the links determined by the link determination unit (13), passage history information (C) representing a route passed by the vehicle at a branch point of the links (k);
a history information storage unit for storing the passage history information (C) generated by the history information generation unit (15); and
a learning unit (18) for generating, on the basis of the passage history information (C) stored by the history information storage unit, learned priority information (Rc) representing the priorities of the respective links used in the determination by the link determination unit (13) of the links (k) passed by the vehicle among a plurality of links (k) branching at the branch point, **characterised in that** the history information generation unit (15) is configured to store the route of the links (k) determined by the link determination unit (13) over a predetermined storage section extending from the branch point, and, if the stored route of the links includes a jump in position as a movement from one of the links (k2) to another one of the links (k5) not in the connection relationship in the road information, to determine the route actually passed by the vehicle at the branch point of the links (k), and to generate the passage history information (C) representing the actually passed route;
wherein the learned priority information (Rc) is information determined on the basis of the passage history information (C) and representing the priorities determined on the basis of passage ratios of passages per total passages by the vehicle of the different routes constituted by the plurality of links (k) branching at the branch point, and
wherein the link determination unit (13) is configured to determine the links (k) passed by the vehicle with the use of the learned priority information (Rc).

2. The vehicle position recognition device according claim 1, further comprising:
a general-purpose priority information acquisition unit for acquiring general-purpose priority information set on the basis of the attributes of roads and representing the priorities of the respective links used in the determination of the links passed by the vehicle among the plurality of branching links,
wherein the link determination unit (13) is configured to determine the links (k) passed by the vehicle with the use of the learned priority information (Rc) in addition to or in place of the general-purpose priority information.

3. The vehicle position recognition device according to any one of claims 1 to 2, wherein the vehicle position information correction unit (14) is configured to correct the vehicle position information on the basis of the result of the determination by the link determination unit (13) of the links (k) passed by the vehicle.

4. The vehicle position recognition device according to any one of claims 1 to 3, wherein the branch point of the links (k) is a narrow-angled branch point.

5. The vehicle position recognition device according to any one of claims 2 to 4, wherein the storage section is a section in which a jump in position occurs as a movement from one of the links (k) represented by the passage history information to another one of the links (k) not in a connection relationship with the one of the links in the road information (R).

6. The vehicle position recognition device according to any one of claims 2 to 5, wherein the storage section is a section extending up to a next branch point in the moving direction of the vehicle.

7. A navigation device comprising:
the vehicle position recognition device (2) according to any one of claims 1 to 6; a road information storage unit (DB1) for storing the road information (R);
a plurality of application programs (23) configured for operating with reference to the vehicle position information recognized by the vehicle position recognition device (2) and the road information (R); and
a guidance information output unit for operating in accordance with the application programs (23) and outputting guidance information.

8. A vehicle position recognition method, comprising:
a vehicle position information acquisition step (#1) of acquiring vehicle position information representing a current position of a vehicle;
a road information acquisition step (#2) of acquiring road information (R) representing a road network in a connection relationship between a multitude of nodes (n) corresponding to intersections and links (K) corresponding to roads connecting between the respective intersections;
a link determination step (#3) of determining, on the basis of the vehicle position information (P) and the road information (R), links (k) passed by the vehicle;
a history information generation step (#6) of generating, on the basis of the links (k) determined by the link determination step (#3), passage history information (C) representing a route passed by the vehicle at a branch point of the links (k);
a history information storage step (#5) of storing in a history information storage unit (15) the passage history information (C) generated by the history information generation step (#5); and
a learning step (#7) of generating, on the basis of the passage history information (C) stored in the history information storage unit, learned priority information (Rc) representing the priorities of the respective links (k) used in the determination by the link determination step (#3) of the links (k) passed by the vehicle among a plurality of links (k) branching at the branch point, **characterised in that** the history information generation step (#6) stores the route of the links (k) determined by the link determination unit (13) over a predetermined storage section extending from the branch point, and, if the stored route of the links includes a jump in position as a movement from one of the links (k2) to another one of the links (k5) not in the connection relationship in the road information, determines the route actually passed by the vehicle at the branch point of the links (k), and generates the passage history information (C) representing the actually passed route;
wherein the learned priority information (Rc) is information determined on the basis of the passage history information (C) and representing the priorities determined on the basis of passage ratios of passages per total passages by the vehicle of the different routes constituted by the plurality of links (k) branching at the branch point, and
wherein the link determination step (#3) determines the links (k) passed by the vehicle with the use of the learned priority information (Rc).

## Patentansprüche

1. Fahrzeugpositionserkennungsvorrichtung mit:
einer Fahrzeugpositionsinformationserfassungseinheit (11) zum Erfassen von Fahrzeugpositionsinformation, die eine gegenwärtige Position eines Fahrzeugs darstellt;
einer Straßeninformationserfassungseinheit (12) zum Erfassen von Straßeninformation (R), die ein Straßennetzwerk in einem Verbindungszusammenhang darstellt zwischen einer Menge von Knoten (n), die Kreuzungen entsprechen, und Verbindungen (k), die Straßen entsprechen, die die jeweiligen Kreuzungen verbinden;
einer Verbindungsbestimmungseinheit (13) zum Bestimmen von Verbindungen (k), die das Fahrzeug passiert hat, basierend auf der Fahrzeugpositionsinformation und der Straßeninformation;
einer Historieninformationserzeugungseinheit (15) zum Erzeugen von Passagenhistorieninformation (C), die eine Route darstellt, die das Fahrzeug an einem Verzweigungspunkt der Verbindungen (k) passiert hat, basierend auf den Verbindungen, die von der Verbindungsbestimmungseinheit (13) bestimmt sind;
einer Historieninformationsspeichereinheit zum Speichern der Passagenhistorieninformation (C), die von der Historieninformationserzeugungseinheit (15) erzeugt worden ist; und
einer Lerneinheit (18) zum Erzeugen gelernter Prioritätsinformation (Rc), die Prioritäten der jeweiligen Verbindungen darstellt, die durch die Verbindungsbestimmungseinheit (13) bei der Bestimmung der Verbindungen (k), die das Fahrzeug passiert hat, von einer Mehrzahl von Verbindungen (k), die sich an dem Verzweigungspunkt verzweigen, verwendet werden, basierend auf der Passagenhistorieninformation (C), die von der Historieninformationsspeichereinheit gespeichert wird,
**dadurch gekennzeichnet, dass**
die Historieninformationserzeugungseinheit (15) konfiguriert ist zum Speichern der Route der Verbindungen (k), die von der Verbindungsbestimmungseinheit (13) bestimmt worden sind, über einem vorbestimmten Speicherabschnitt, der sich von dem Verzweigungspunkt aus erstreckt, und wenn die gespeicherte Route der Verbindungen einen Positionssprung als eine Bewegung von einer der Verbindungen (k2) zu einer anderen der Verbindungen (k5), die nicht in Verbindungszusammenhang in der Straßeninformation ist, aufweist, zum Bestimmen der Route, die das Fahrzeug an dem Verzweigungspunkt der Verbindungen (k) tatsächlich passiert hat, und zum Erzeugen der Passagenhistorieninformation (C), die die tatsächlich passierte Route darstellt;
wobei die gelernte Prioritätsinformation (Rc) Information ist, die bestimmt ist basierend auf der Passagenhistorieninformation (C) und Prioritäten darstellt, die bestimmt sind basierend auf dem Passagenverhältnis der Passagen pro Gesamtpassagen des Fahrzeugs von unterschiedlichen Routen, die durch die Mehrzahl von Verbindungen (k) gebildet werden, die sich an dem Verzweigungspunkt verzweigen, und
bei der die Verbindungsbestimmungseinheit (13) konfiguriert ist zum Bestimmen der Verbindungen (k), die das Fahrzeug passiert hat.

2. Fahrzeugpositionserkennungsvorrichtung nach Anspruch 1, ferner mit
einer Allzweckprioritätsinformationserfassungseinheit zum Erfassen von Allzweckprioritätsinformation, die festgelegt ist basierend auf den Attributen von Straßen und Prioritäten der jeweiligen Verbindung darstellt, die bei der Bestimmung der Verbindungen verwendet werden, die das Fahrzeug passiert hat, von der Mehrzahl von Verzweigungsverbindungen, wobei
die Verbindungsbestimmungseinheit (13) konfiguriert ist zum Bestimmen der Verbindungen (k), die das Fahrzeug passiert hat, indem zusätzlich oder anstelle der Allzweckprioritätsinformation die gelernte Prioritätsinformation (Rc) verwendet wird.

3. Fahrzeugpositionserkennungsvorrichtung nach einem der Ansprüche 1 bis 2, bei der die Fahrzeugpositionsinformationskorrektureinheit (14) konfiguriert ist zum Korrigieren der Fahrzeugpositionsinformation basierend auf dem Ergebnis der Bestimmung der Verbindungen (k), die das Fahrzeug passiert hat, durch die Verbindungsbestimmungseinheit (13).

4. Fahrzeugpositionserkennungsvorrichtung nach einem der Ansprüche 1 bis 3, bei der der Verzweigungspunkt der Verbindungen (k) ein Verzweigungspunkt mit kleinem Winkel ist.

5. Fahrzeugpositionserkennungsvorrichtung nach einem der Ansprüche 2 bis 4, bei der der Speicherabschnitt ein Abschnitt ist, in dem ein Positionssprung auftritt, als Bewegung von einer der Verbindungen (k), die durch die Passagenhistorieninformation dargestellt ist, zu einer anderen der Verbindungen (k), die nicht in Verbindungszusammenhang mit der einen der Verbindungen in der Straßeninformation (R) ist.

6. Fahrzeugpositionserkennungsvorrichtung nach einem der Ansprüche 2 bis 5, bei der der Speicherabschnitt ein Abschnitt ist, der sich bis zu einem nächsten Verzweigungspunkt in Bewegungsrichtung des Fahrzeugs erstreckt.

7. Navigationsvorrichtung mit:
einer Fahrzeugpositionserkennungsvorrichtung (2) nach einem der Ansprüche 1 bis 6,
einer Straßeninformationsspeichereinheit (DB1) zum Speichern der Straßeninformation (R);
einer Mehrzahl von Anwendungsprogrammen (23), die konfiguriert sind zum Arbeiten unter Bezugnahmen auf die Fahrzeugpositionsinformation, die von der Fahrzeugpositionserkennungsvorrichtung (2) erkannt worden ist, und der Straßeninformation (R); und
einer Führungsinformationsausgabeeinheit zum Arbeiten gemäß den Anwendungsprogrammen (23) und zum Ausgeben von Führungsinformation.

8. Fahrzeugpositionserkennungsverfahren mit:
einem Fahrzeugpositionsinformationserfassungsschritt (#1) zum Erfassen von Fahrzeugpositionsinformation, die eine gegenwärtige Position eines Fahrzeugs darstellt;
einem Straßeninformationserfassungsschritt (#2) zum Erfassen von Straßeninformation (R), die ein Straßennetzwerk in einem Verbindungszusammenhang darstellt zwischen einer Menge von Knoten (n), die Kreuzungen entsprechen, und Verbindungen (k), die Straßen entsprechen, die die jeweiligen Kreuzungen verbinden;
einem Verbindungsbestimmungsschritt (#3) zum Bestimmen von Verbindungen (k), die das Fahrzeug passiert hat, basierend auf der Fahrzeugpositionsinformation (P) und der Straßeninformation (R);
einem Historieninformationserzeugungsschritt (#6) zum Erzeugen, basierend auf den Verbindungen (k), die von dem Verbindungsbestimmungsschritt (#3) bestimmt worden sind, einer Passagenhistorieninformation (C), die eine Route darstellt, die das Fahrzeug an dem Verzweigungspunkt der Verbindungen (k) passiert hat;
einem Historieninformationsspeicherschritt (#5) zum Speichern der Passagenhistorieninformation (C), die von dem Historieninformationserzeugungsschritt (#5) erzeugt worden ist, in einer Historieninformationsspeichereinheit (15); und
einem Lernschritt (#7) zum Erzeugen, basierend auf der in der Historieninformationsspeichereinheit gespeicherten Passagenhistorieninformation (C), einer gelernten Prioritätsinformation (Rc), die die Prioritäten der jeweiligen Verbindungen (k) darstellt, die verwendet werden bei der Bestimmung durch den Verbindungsbestimmungsschritt (#3) der Verbindungen (k), die das Fahrzeug passiert hat, von einer Mehrzahl von Verbindungen (k), die an dem Verzweigungspunkt abzweigen, **dadurch gekennzeichnet, dass**
der Historieninformationserzeugungsschritt (#6) die Route der Verbindungen (k) speichert, die von der Verbindungsbestimmungseinheit (13) über einem vorbestimmten Speicherabschnitt bestimmt worden sind, der sich erstreckt von dem Verzweigungspunkt, und wenn die gespeicherte Route der Verbindungen einen Positionssprung aufweist als Bewegung von einer der Verbindung (k2) zu einer anderen der Verbindungen (k5), die nicht in dem Verbindungszusammenhang in der Straßeninformation ist, die Route bestimmt, die tatsächlich das Fahrzeug an dem Verzweigungspunkt der Verbindungen (k) passiert hat, und die Passagenhistorieninformation (C), die die tatsächlich passierte Route darstellt, erzeugt; wobei
die gelernte Prioritätsinformation (Rc) Information ist, die bestimmt wird basierend auf der Passagenhistorieninformation (C) und die Prioritäten darstellt, die bestimmt worden sind basierend auf dem Passagenverhältnis von Passagen pro Gesamtpassagen durch das Fahrzeug der unterschiedlichen Routen, die durch die Mehrzahl von Verbindungen (k) gebildet werden, die an dem Verzweigungspunkt abzweigen, und wobei
der Verbindungsbestimmungsschritt (#3) die Verbindungen (k) bestimmt, die das Fahrzeug passiert hat, indem die gelernte Prioritätsinformation (Rc) verwendet wird.

## Revendications

1. Dispositif de reconnaissance de position de véhicule, comprenant :
une unité d'acquisition d'informations de position de véhicule (11) pour acquérir des informations de position de véhicule représentant une position actuelle d'un véhicule ;
une unité d'acquisition d'informations de route (12) pour acquérir des informations de route (R) représentant un réseau de routes dans une relation de raccordement entre une multitude de noeuds (n) correspondant à des intersections et des jonctions (K) correspondant à des routes se raccordant entre les intersections respectives ;
une unité de détermination de jonction (13) pour déterminer, en fonction des informations de position de véhicule et des informations de route, des jonctions (k) par lesquelles le véhicule est passé ;
une unité de génération d'informations historiques (15) pour générer, en fonction des jonctions déterminées par l'unité de détermination de jonction (13), des informations historiques de passage (C) représentant un itinéraire par lequel le véhicule est passé à un point d'embranchement des jonctions (k) ;
une unité de stockage d'informations historiques pour stocker les informations historiques de passage (C) générées par l'unité de génération d'informations historiques (15) ; et
une unité d'apprentissage (18) pour générer, en fonction des informations historiques de passage (C) stockées par l'unité de stockage d'informations historiques, des informations de priorité apprises (Rc) représentant les priorités des jonctions respectives utilisées dans la détermination par l'unité de détermination de jonction (13) des jonctions (k) par lesquelles le véhicule est passé parmi une pluralité de jonctions (k) s'embranchant au point d'embranchement,
**caractérisé en ce que** l'unité de génération d'informations historiques (15) est configurée pour stocker l'itinéraire des jonctions (k) déterminées par l'unité de détermination de jonction (13) sur une section de stockage prédéterminée s'étendant à partir du point d'embranchement, et, si l'itinéraire stocké des jonctions inclut un saut de position sous forme de mouvement d'une des jonctions (k2) à une autre des jonctions (k5) non dans la rotation de raccordement dans les informations de route, pour déterminer l'itinéraire par lequel le véhicule est passé en réalité au point d'embranchement des jonctions (k), et pour générer les informations historiques de passage (C) représentant par l'itinéraire par lequel le véhicule est passé en réalité ;
dans lequel les informations de priorité apprises (Rc) sont des informations déterminées en fonction des informations historiques de passage (C) et représentant les priorités déterminées en fonction de rapports de passage, de passages par passages totaux, par le véhicule, par les différents itinéraires constitués par la pluralité de jonctions (k) s'embranchant au point d'embranchement, et
dans lequel l'unité de détermination de jonction (13) est configurée pour déterminer les jonctions (k) par lesquelles le véhicule est passé en utilisant les informations de priorité apprises (Rc).

2. Dispositif de reconnaissance de position de véhicule selon la revendication 1, comprenant en outre :
une unité d'acquisition d'informations de priorité d'usage général pour acquérir des informations de priorité d'usage général réglées en fonction des attributs de routes et représentant les priorités des jonctions respectives utilisées dans la détermination des jonctions par lesquelles le véhicule est passé parmi la pluralité de jonctions s'embranchant,
dans lequel l'unité de détermination de jonction (13) est configurée pour déterminer les jonctions (k) par lesquelles le véhicule est passé en utilisant les informations de priorité apprises (Rc) en plus ou à la place des informations de priorité d'usage général.

3. Dispositif de reconnaissance de position de véhicule selon l'une quelconque des revendications précédentes 1 à 2,
dans lequel les informations de position de véhicule correction unit (14) sont configurées pour corriger les informations de position de véhicule en fonction du résultat de la détermination par l'unité de détermination de jonction (13) des jonctions (k) par lesquelles le véhicule est passé.

4. Dispositif de reconnaissance de position de véhicule selon l'une quelconque des revendications précédentes 1 à 3, dans lequel le point d'embranchement des jonctions (k) est un point d'embranchement à angle étroit.

5. Dispositif de reconnaissance de position de véhicule selon l'une quelconque des revendications précédentes 2 à 4,
dans lequel la section de stockage est une section dans laquelle un saut de position se produit sous forme de mouvement d'une des jonctions (k) représentées par les informations historiques de passage à une autre des jonctions (k) non dans une relation de raccordement avec l'une des jonctions dans les informations de route (R).

6. Dispositif de reconnaissance de position de véhicule selon l'une quelconque des revendications précédentes 2 à 5,
dans lequel la section de stockage est une section s'étendant jusqu'à un point d'embranchement suivant dans la direction de mouvement du véhicule.

7. Dispositif de navigation, comprenant :
le dispositif de reconnaissance de position de véhicule (2) selon l'une quelconque des revendications précédentes 1 à 6 ;
une unité de stockage d'informations de route (DB1) pour stocker les informations de route (R) ;
une pluralité de programmes d'application (23) configurés pour fonctionner en référence aux informations de position de véhicule reconnues par le dispositif de reconnaissance de position de véhicule (2) et aux informations de route (R) ; et
une unité de sortie d'information de guidage pour fonctionner conformément aux programmes d'application (23) et produire en sortie des informations de guidage.

8. Procédé de reconnaissance de position de véhicule, comprenant :
une étape d'acquisition d'informations de position de véhicule (#1) de l'acquisition d'informations de position de véhicule représentant une position actuelle d'un véhicule ;
une étape d'acquisition d'informations de route (#2) de l'acquisition d'informations de route (R) représentant un réseau de routes dans une relation de raccordement entre une multitude de noeuds (n) correspondant à intersections et jonctions (K) correspondant à des routes se raccordant entre les intersections respectives ;
une étape de détermination de jonction (#3) de la détermination, en fonction des informations de position de véhicule (P) et des informations de route (R), de jonctions (k) par lesquelles le véhicule est passé ;
une étape de génération d'informations historiques (#6) de la génération, en fonction des jonctions (k) déterminées par l'étape de détermination de jonction (#3), d'informations historiques de passage (C) représentant un itinéraire par lequel le véhicule est passé à un point d'embranchement des jonctions (k) ;
une étape de stockage d'informations historiques (#5) du stockage, dans une unité de stockage d'informations historiques (15), des informations historiques de passage (C) générées par l'étape de génération d'informations historiques (#5) ; et
une étape d'apprentissage (#7) de la génération, en fonction des informations historiques de passage (C) stockées dans l'unité de stockage d'informations historiques, d'informations de priorité apprises (Rc) représentant les priorités des jonctions respectives (k) utilisées dans la détermination, par l'étape de détermination de jonction (#3), des jonctions (k) par lesquelles le véhicule est passé parmi une pluralité de jonctions (k) s'embranchant au point d'embranchement,
**caractérisé en ce que**
l'étape de génération d'informations historiques (#6) stocke l'itinéraire des jonctions (k) déterminées par l'unité de détermination de jonction (13) sur une section de stockage prédéterminée s'étendant à partir du point d'embranchement, et, si l'itinéraire stocké des jonctions inclut un saut de position sous forme de mouvement d'une des jonctions (k2) à une autre des jonctions (k5) non dans la relation de raccordement dans les informations de route, détermine l'itinéraire par lequel le véhicule est passé en réalité au point d'embranchement des jonctions (k), et génère les informations historiques de passage (C) représentant l'itinéraire par lequel le véhicule est passé en réalité ;
dans lequel les informations de priorité apprises (Rc) sont des informations déterminées en fonction des informations historiques de passage (C) et représentant les priorités déterminées en fonction de rapports de passage, de passages par passages totaux, par le véhicule, par les différents itinéraires constitués par la pluralité de jonctions (k) s'embranchant au point d'embranchement, et
dans lequel l'étape de détermination de jonction (#3) détermine les jonctions (k) par lesquelles le véhicule est passé en utilisant les informations de priorité apprises (Rc).
